**Europäisches Patentamt**

**European Patent Office**

**Office européen des brevets**

(19)

(11) Numéro de publication : **0 319 370 B1**

(12)

# FASCICULE DE BREVET EUROPEEN

(45) Date de publication du fascicule du brevet :
**22.04.92 Bulletin 92/17**

(51) Int. Cl.$^5$ : **G05G 1/16**

(21) Numéro de dépôt : **88402917.4**

(22) Date de dépôt : **21.11.88**

(54) **Patin pour pédale de commande et procédé de montage de ce patin.**

(30) Priorité : **30.11.87 FR 8716590**

(43) Date de publication de la demande :
**07.06.89 Bulletin 89/23**

(45) Mention de la délivrance du brevet :
**22.04.92 Bulletin 92/17**

(84) Etats contractants désignés :
**DE GB IT**

(56) Documents cités :
**AT-B- 367 184**
**FR-A- 936 544**
**US-A- 1 584 659**
**US-A- 3 586 202**
**US-A- 4 427 316**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Petiot, Jean-Paul**
**42 Route d'Orsay**
**F-91460 Marcoussis (FR)**

(74) Mandataire : **Durand, Yves Armand Louis et al**
**Cabinet Z. Weinstein 20, Avenue de Friedland**
**F-75008 Paris (FR)**

EP 0 319 370 B1

## Description

La présente invention a essentiellement pour objet un patin ou capuchon pour pédale de commande d'accélérateur, d'embrayage ou analogue sur un véhicule automobile par exemple.

Elle vise également un procédé de montage de ce patin.

On sait que les patins ou capuchons de pédale sont généralement réalisés en caoutchouc ou toute autre matière plastique appropriée et sont fixés sur un support formant l'extrémité de la pédale. De tels patins ou capuchons empêchent le dérapage du pied du conducteur sur la pédale (voir document US-A- 1 584 659).

Toutefois, ces patins ou capuchons sont parfois difficiles à mettre en place et exigent un certain temps de montage, ce que l'on cherche aujourd'hui à éviter. De plus, leur maintien en position est, à la longue, difficile à assurer, et il y a aussi des risques que lesdits patins ou capuchons s'échappent de la plaque-support sur laquelle ils sont montés.

Aussi, la présente invention a pour but de remédier à ces inconvénients en proposant un patin de pédale qui est d'un montage facile et rapide, en ce sens que ce montage peut être effectué par un robot, et dont la fixation sur la plaque-support est toujours correcte et très solide.

A cet effet, l'invention a pour objet un patin pour pédale de commande d'accélérateur, d'embrayage ou analogue sur un véhicule automobile par exemple, et du type comprenant une face interne qui est appliquée sur la face d'une plaque-support formant pédale, caractérisé par au moins deux ergots de forme sensiblement conique, faisant saillie de la face interne du patin, comportant un trou borgne ménagé dans l'axe de chaque ergot et débouchant à la face externe du patin, et comportant une gorge au niveau de leur racine pour permettre le clippage des ergots sur les bords d'orifices traversants ménagés dans la plaque-support de pédale.

Ce patin comporte encore des bords tombés non liés entre eux et cachant les flancs de la face de la pédale.

L'invention vise encore un procédé de montage automatique du patin répondant aux caractéristiques ci-dessus, caractérisé en ce qu'il consiste à introduire des tiges montées coulissantes sur une semelle, dans les trous borgnes des ergots, à appliquer le patin ainsi saisi par les tiges contre la face de la pédale, à pousser les tiges pour enfoncer et clipper les ergots dans ladite face, et à retirer les tiges des ergots et la semelle du contact avec le patin.

Mais d'autres caractéristiques et avantages de l'invention apparaîtront mieux dans la description détaillée qui suit et se réfère aux dessins annexés, donnés uniquement à titre d'exemple, et dans lesquels:

Les figures 1 à 3 illustrent successivement, en élévation et en coupe verticale, les trois phases essentielles de montage du patin sur la plaque-support ou face de la pédale destinée à le recevoir; et

La figure 4 est une vue en perspective montrant le patin en position montée sur la pédale.

Suivant un exemple de réalisation, et en se reportant aux dessins, on voit qu'un patin ou capuchon P selon cette invention est réalisé en caoutchouc ou tout autre matière plastique appropriée, et comporte une face interne 1 qui est plane et qui est applicable sur la face également plane 3 d'une plaque-support 2 formant pédale et solidaire, comme connu en soi, d'un élément 4 qui peut être monté articulé sur un axe 4a, comme on le voit sur la figure 4.

Des ergots ou tétons 5 pouvant être au nombre de deux ou plus, font saillie de la face plane 1 du patin P en venant de matière ou de moulage avec lui.

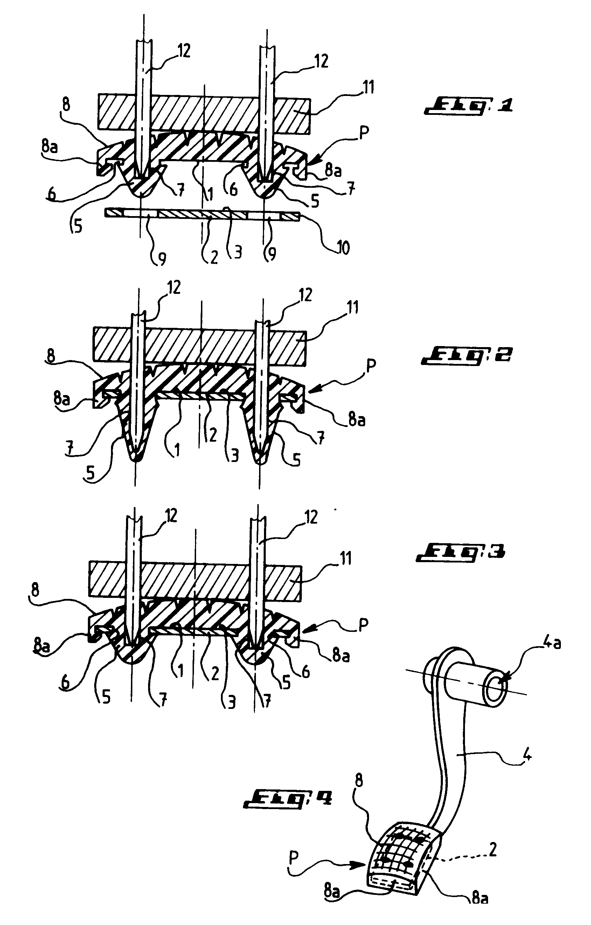

Ces ergots 5 présentent, comme on le voit bien sur les figures 1 à 3 une forme sensiblement conique et comportent une gorge au niveau de leur racine.

Un trou borgne 7 est ménagé dans l'axe de chaque ergot 5 et débouche sur la face externe et bombée convexe 8 du patin P, tandis que la plaque-support 2 de la pédale comporte des orifices traversants 9 permettant le clippage des ergots 5, comme cela sera décrit en détail plus loin.

Le patin P comporte des bords tombés 8a qui cachent les flancs ou bords 10 de la plaque-support 2, lorsque ledit patin est en position montée. Ces bords tombés 8a sont de préférence non liés entre eux, c'est-à-dire ne sont pas réunis au niveau des angles que font lesdits bords sur le pourtour du patin.

On décrira maintenant la manière dont s'effectue le montage du patin qui vient d'être décrit sur la plaque-support à face plane 3 de la pédale, et cela en se référant aux figures 1 à 3.

Pour monter le patin, on utilise un robot susceptible d'actionner une semelle 11 dans laquelle sont montées coulissantes des tiges 12 dont l'extrémité peut être arrondie ou conique.

Les tiges 12 sont introduites dans les trous borgnes 7 des ergots 5, de sorte que le patin P est saisi par lesdites tiges, comme on le voit bien sur la figure 1.

Le patin P ainsi saisi est présenté ou appliqué sur la face plane 3 de la plaque-support 2 de la pédale.

A ce stade, on exerce une force de poussée sur les tiges 12, ce qui réalise l'allongement des ergots 5 et leur passage au travers des trous 9 dans la plaque-support 2. Pendant cette opération, la semelle 1 continue à avancer en direction de la plaque-support 2, et cela jusqu'à l'application de la face interne plane 1 du patin sur la face plane 3 de la pédale, de sorte que, finalement, les ergots 5 seront clippés, grâce aux gorges 6, sur les bords des orifices 9 dans la plaque-support 2, comme on le voit bien sur la figure 2.

Le montage étant maintenant réalisé, on retire alors les tiges 12 des trous borgnes 7 des ergots 5, comme on le voit sur la figure 3, et on retire simultanément la semelle 11 du contact avec la surface externe et bombée 8 du patin P, ce qui permet de recommencer un cycle identique à celui qui vient d'être décrit pour réaliser un autre montage.

On a donc réalisé suivant l'invention un patin de pédale de conception particulière et pouvant être monté au moyen d'un robot de façon à permettre un montage rapide, toujours correct et solide.

On observera que la face externe et bombée 8 du patin peut comporter des stries suivant une géométrie quelconque, et que les dimensions, la matière et l'épaisseur du patin peuvent être quelconques.

**Revendications**

1. Patin pour pédale de commande d'accélérateur ou d'embrayage sur un véhicule automobile par exemple, et du type comprenant une face interne (1) qui est appliquée sur la face (3) d'une plaque-support (2) formant pédale, caractérisé par au moins deux ergots (5) de forme sensiblement conique, faisant saillie de la face interne (1) du patin (P), comportant un trou borgne (7) ménagé dans l'axe de chaque ergot et débouchant à la face externe (8) du patin, et comportant une gorge (6) au niveau de leur racine pour permettre le clippage des ergots (5) sur les bords d'orifices traversants (9) ménagés dans la plaque-support (2) de pédale.

2. Patin selon la revendication 1, caractérisé en ce qu'il comporte des bords tombés (8a) non liés entre eux et cachant les flancs de la face (3) de la pédale.

3. Procédé de montage automatique d'un patin selon la revendication 1, sur une pédale, caractérisé en ce qu'il consiste à introduire des tiges (12) montées coulissantes sur une semelle (11) dans les trous borgnes (7) des ergots (5), à appliquer le patin (P) ainsi saisi par les tiges (12) contre la face (3) de la pédale, à pousser les tiges (12) pour enfoncer et clipper les ergots (5) dans ladite face, et à retirer les tiges des ergots (5) et la semelle (11) du contact avec le patin.

**Patentansprüche**

1. Auflage für Fahrsteuerungs-bzw. Kupplungspedal z.B. an einem Kraftfahrzeug und derjenigen Gattung mit einer Innenfläche (1), die auf die Fläche (3) einer das Pedal bildenden Trägerplatte (2) aufgesetzt ist, gekennzeichnet durch wenigstens zwei Ansätze (5) im wesentlichen kegelförmiger Gestalt, die von der Innenseite (1) der Auflage (P) abstehen, ein entlang der Achse jedes Ansatzes gebildetes und an der Aussenseite (8) der Auflage ausmündendes Sackloch (7) aufweisen und eine Ringnut (6) an deren Wurzel aufweisen, um das Aufklemmen der Ansätze (5) an den Rändern von in der Pedalträgerplatte (2) gebildeten Durchgangslöchern (9) zu gestatten.

2. Auflage nach Anspruch 1, dadurch gekennzeichnet, dass sie nicht miteinander verbundene und die Flanken der Fläche (3) des Pedals versteckende abwärts weisende Randleisten (8a) aufweist.

3. Verfahren zum selbsttätigen Einbau einer Auflage nach Anspruch 1 an einem Pedal, dadurch gekennzeichnet, dass es darin besteht, gleitbar an einer Sohle (11) angeordnete Stifte (12) in die Sacklöcher (7) der Ansätze (5) einzuführen, die somit durch die Stifte (12) ergriffene Auflage (P) an die Fläche (3) des Pedals anzulegen, die Stifte (12) zu schieben, um die Ansätze (5) in die besagte Fläche einzutreiben und einzuklemmen und die Stifte aus den Ansätzen (5) herauszuziehen und die Berührung der Sohle (11) mit der Auflage aufzuheben.

**Claims**

1. Pad for the accelerator or clutch control pedal on an an automotive vehicle for example and of the type comprising an inner face (1) which is applied onto the face (3) of a support plate (2) forming a pedal, characterized by at least two snugs (5) of substantially conical shape projecting from the inner face (1) of the pad (P), comprising a blind hole (7) formed along the axis of each snug and opening at the outer face (8) of the pad, and comprising a groove (6) at their root for allowing the clipping of the snugs (5) onto the edges of thoroughfare orifices (9) formed in the pedal support plate (2).

2. Pad according to claim 1, characterized in that it comprises turned-down edges (8a) not connected to each other and concealing the flanks of the face (3) of the pedal.

3. Method of automatically mounting a pad according to claim 1 onto a pedal, characterized in that it consists in inserting rods (12) slidably mounted onto a plate (11) into the blind holes (7) of the snugs (5), applying the pad (P) thus gripped by the rods (12) against the face (3) of the pedal, pushing the rods (12) for driving and clipping the snugs (5) into the said face and withdrawing the rods from the snugs (5) and the plate (11) from engagement with the pad.

_Fig. 1_

_Fig. 2_

_Fig. 3_

_Fig. 4_